# EUROPEAN PATENT APPLICATION

(11) **EP 1 643 382 A2**
(43) Date of publication of application: **05.04.2006**
(21) Application number: 05104615.9
(22) Date of filing: 30.05.2005
(51) Int. Cl.: G06F 17/30

(54) **System and method for unified navigation in Web pages**

(30) Priority: 30.09.2004 US 955763
(71) Applicant: MICROSOFT CORPORATION, Redmond, Washington 98052-6399 (US)
(72) Inventor: Miller, Patrick C., Redmond, WA 98052 (US); Stocker, Ryan R., Redmond, WA 98052 (US); Cawood, Steve G., Redmond, WA 98052 (US)
(74) Representative: Grünecker, Kinkeldey, Stockmair & Schwanhäusser Anwaltssozietät

(57) **Abstract**

A navigation structure is generated at runtime based upon the hierarchy of a site. The navigation structure includes the ability to author specific links throughout the structure. These specific links or child objects allow the navigation structure to be customized while maintaining site organization according to the hierarchy.

## Description

### Background of the Invention

Virtually all web applications are made up of a set of pages. One of the primary concerns of a web application developer is managing the navigation between these pages. The navigation model may be one of the more complicated portions of a web page. Managing the navigations across an entire web site made up of multiple pages can be a difficult task.

Some methods for creating and managing the navigations of web site have been previously provided. Some of these methods include authoring the navigation and embedding it directly into a web page itself, providing an external structure directed to navigation that is separated from the content, or having the structure of the navigation derived from the structure of the web site.

Authoring the navigation allows for customization of the navigation structure and allows a web site developer a high degree of flexability in creating and managing the navigation of the web site. However, as the size of the web site increases, the amount of effort required to keep these authored navigations in sync also increases dramatically. Conversely, structuring the navigation according to a heirarchy allows for easier management as the web site grows, but a great deal of the customization is lost. A solution is needed so that the navigation strucuture of web site may be consistently managed as it grows, and still provided the author of the web site the ability to design their own navigations.

### Summary of the Invention

Embodiments of the present invention are related to a system and method for unified navigation, where the navigation structure is controlled according to a hierarchy while still allowing specific navigations to be authored throughout the navigation structure. Data corresponding to the navigation structure of a site is cached. The cached data corresponds to a hierarchical tree structure that represents the hierarchy of the navigations of the site. Managing the hierarchical tree structure allows the site to be organized according to its structure. Additionally, authored navigations or links are supported throughout the navigation structure.

In accordance with one aspect of the invention, the navigation structure of the site is generated at runtime and is represented by fields on a current page being rendered. The links are organized according to a global navigation field and a section navigation field. The global navigation field generally includes links to major areas of the site, while the section navigation field includes links targeted to a specific area. The data corresponding to the navigation structure is therefore similarly for each page, with tables of links for the global navigation field and tables of links for the section navigation field associated with each page.

In accordance with another aspect of the present invention, certain authored links allow "grafting" of one section of the navigation structure into another section of the navigation structure. Grafting refers to a grafted link being generated such that the children of the container or page linked to is treated as children of another section of the navigation structure from the perspective of a user navigating the site.

In accordance with yet another aspect of the present invention, metadata is cached corresponding to each page. The metadata includes parameters for how navigations to pages are to be handled. For example, a page may have an associated scheduling parameter. The scheduling parameter prevents content from publishing until a specified date or time is reached. Other parameters are also included that are described in greater detail below.

In accordance with a further aspect of the invention, navigation objects are created that correspond to navigation links associated with the network site. A navigation structure is generated from the navigation objects. The navigation structure is organized according a hierarchy associated with the navigation links. An authored navigation object is included within the navigation structure when the network site includes an authored navigation link. A page of the site is then rendered where the page includes a field that corresponds to the navigation structure.

### Brief Description of the Drawings

FIGURE 1 illustrates an exemplary computing device that may be used in one exemplary embodiment of the present invention.
FIGURE 2 illustrates an exemplary screen shot of a typical page within a site in accordance with the present invention.
FIGURE 3 illustrates an exemplary tree navigation structure of a page that includes an intra-tree link in accordance with the present invention.
FIGURE 4 illustrates an exemplary tree navigation structure that includes a cross-tree link to another site in accordance with the present invention.
FIGURE 5 illustrates a block diagram of an exemplary set of data corresponding to a node of a navigation structure in accordance with the present invention.
FIGURE 6 illustrates an exemplary system for caching and producing a navigation structure in accordance with the present invention.
FIGURE 7 illustrates an exemplary screen shot of a page that includes on-page editing for the navigation associated with the page in accordance with the present invention.
FIGURE 8 illustrates an exemplary user interface for editing of navigation links associated with a page of a site in accordance with the present invention.
FIGURE 9 illustrates an exemplary user interface for adding new navigation links to a page of a site in accordance with the present invention.
FIGURE 10 illustrates an exemplary screen shot of a page indicating a drag and drop of a new link in accordance with the present invention.
FIGURE 11 illustrates an exemplary user interface for sorting the order of navigation links associated with a page of a site in accordance with the present invention.
FIGURE 12 illustrates an exemplary user interface for selecting inclusion of a page within the navigation of a site and sorting the pages of the site in accordance with the present invention.
FIGURE 13 illustrates an exemplary user interface for selecting the inheritance property associated with a page of a site in accordance with the present invention.

### Detailed Description

The present invention now will be described more fully hereinafter with reference to the accompanying drawings, which form a part hereof, and which show, by way of illustration, specific exemplary embodiments for practicing the invention. This invention may, however, be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods or devices. Accordingly, the present invention may take the form of an entirely hardware embodiment, an entirely software embodiment or an embodiment combining software and hardware aspects. The following detailed description is, therefore, not to be taken in a limiting sense.

### Illustrative Operating Environment

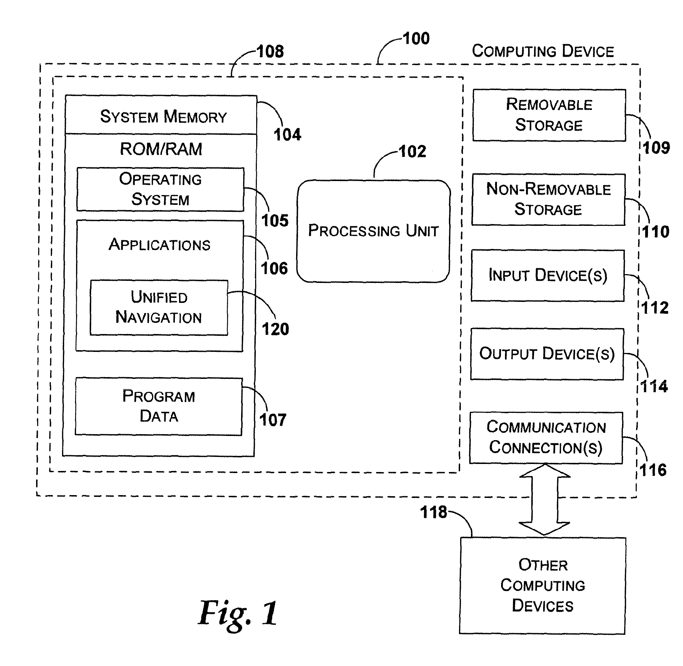

With reference to FIGURE 1, one exemplary system for implementing the invention includes a computing device, such as computing device 100. Computing device 100 may be configured as a client, a server, mobile device, or any other computing device. In a very basic configuration, computing device 100 typically includes at least one processing unit 102 and system memory 104. Depending on the exact configuration and type of computing device, system memory 104 may be volatile (such as RAM), non-volatile (such as ROM, flash memory, etc.) or some combination of the two. System memory 104 typically includes an operating system 105, one or more applications 106, and may include program data 107. In one embodiment, application 106 includes a unified navigation application 120 for implementing the functionality of the present invention. This basic configuration is illustrated in FIGURE 1 by those components within dashed line 108.

Computing device 100 may have additional features or functionality. For example, computing device 100 may also include additional data storage devices (removable and/or non-removable) such as, for example, magnetic disks, optical disks, or tape. Such additional storage is illustrated in FIGURE 1 by removable storage 109 and non-removable storage 110. Computer storage media may include volatile and nonvolatile, removable and non-removable media implemented in any method or technology for storage of information, such as computer readable instructions, data structures, program modules, or other data. System memory 104, removable storage 109 and non-removable storage 110 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 100. Any such computer storage media may be part of device 100. Computing device 100 may also have input device(s) 112 such as keyboard, mouse, pen, voice input device, touch input device, etc. Output device(s) 114 such as a display, speakers, printer, etc. may also be included.

Computing device 100 also contains communication connections 116 that allow the device to communicate with other computing devices 118, such as over a network. Communication connection 116 is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

### Unified Navigation

Throughout the specification and the claims, the term "page" or "web page" refers to a document on a network (e.g., World Wide Web) that is identified by a unique URL (Uniform Resource Locator). The term "site" or "web site" refers to a location on a network (e.g., World Wide Web) that may include one or more pages (e.g., a homepage). The term "root page" generally refers to the top page in a navigation structure for a site, much the same as the term root directory refers to the top directory in a file system.

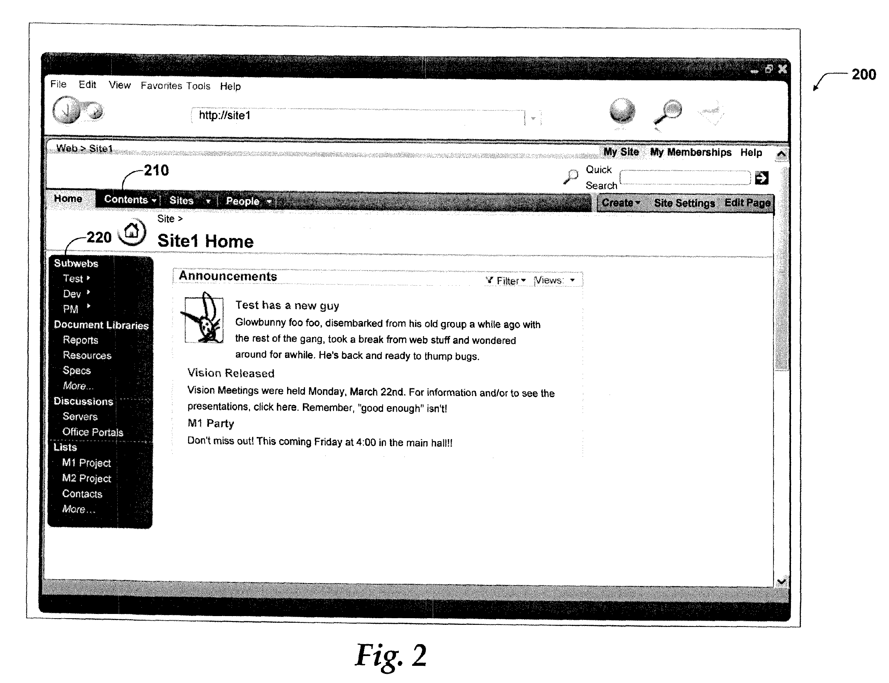

The term "top navigation" or "global navigation" generally refers to the horizontal bar at the top of most pages that normally consists of the main sub areas of the root, and often some links to other pages in the site. There are also scenarios where a subsite may have its own global navigation for an entire collection of areas. The appearance of the global navigation field may take on many styles (e.g., stack tabs) as selected by the site author (see 210 of FIGURE 2)

The term "section navigation" generally refers to a navigation field that typically changes from area to area, but remains consistent within a single area. The section navigation may include sub areas or pages with the site. Sometimes the underlying hierarchy of the links in the section navigation is displayed by using flyouts or static nested links. The section navigation may have links to other areas of the site or "external links" in the section navigation. The appearance of the section navigation field may also take on many styles, with some typical section navigation fields shown on the left side of the page (see 220, of FIGURE 2).

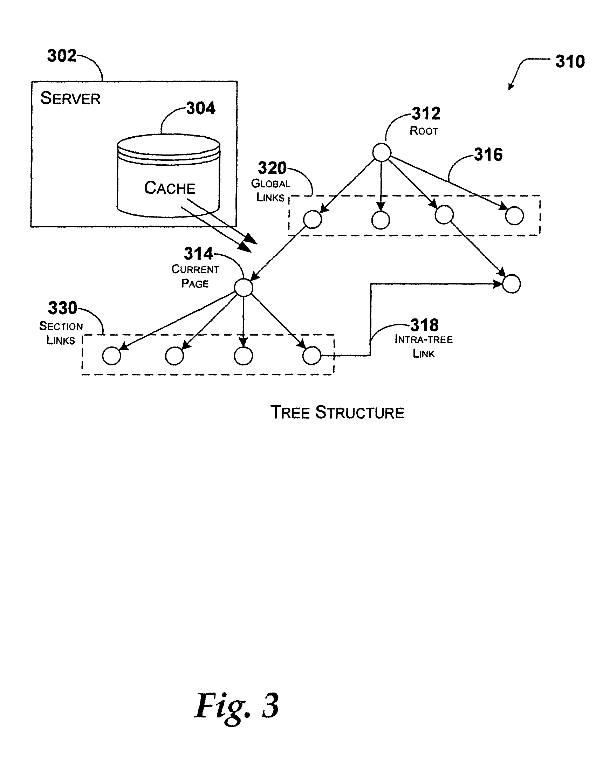

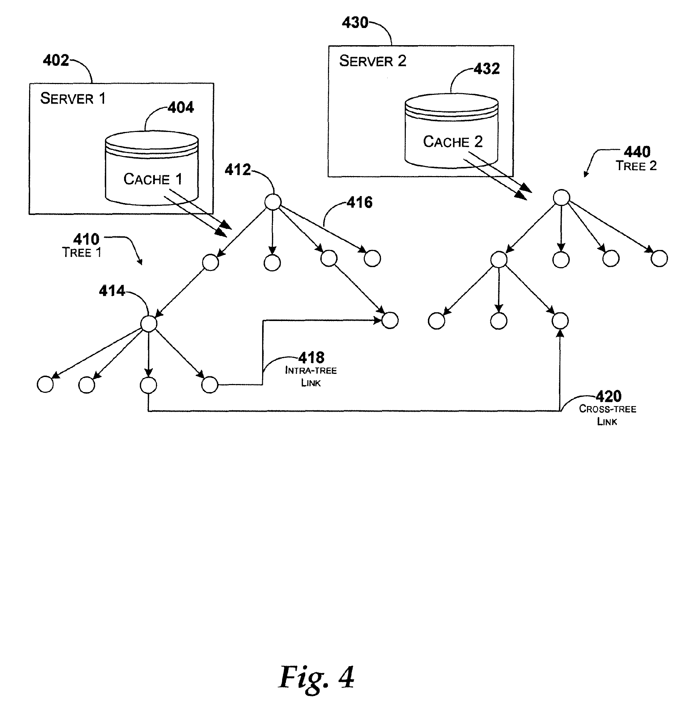

Embodiments of the present invention are related to allowing a site author to drive the navigation of the site off the hierarchy of the site while still providing for changes and specifically authored links to be inserted throughout the navigation structure. The navigation structure of the site is represented as a tree, with nodes corresponding to containers and items and the branches corresponding the links themselves (see FIGURES 3 and 4). In accordance with the present invention, authored links may be added that link nodes intra-tree (i.e., within the same site), or cross-tree (i.e., in a different site). Previously, intra-tree or cross-tree links required that each of the new links be authored specifically as they conflicted with the hierarchy of the site. Such a proposition became extremely difficult when the linked node corresponded to a container that included a great number of child nodes (e.g., nodes lower in a hierarchical structure). Each of these child nodes would also require a new link to be authored specifically for that node. In addition, these new links would be duplicates of the links in the other site or other location in the site, wasting not only time and effort but space. Furthermore, changes at the other location or within the other site would not be reflected in these newly authored duplicate links.

The present invention solves for all of these problems by allowing these intra-tree or cross-tree links to be authored as "virtual links" such that these links are still driven off of the hierarchy of the site or sites. This allows an author to state how many items or containers they want to "graft"' from another location in the site, or from another site. These items and containers then appear as children of the node corresponding to authored link, without having to author each of the links corresponding to these items or containers.

FIGURE 2 illustrates an exemplary screen shot of a typical page within a site in accordance with the present invention. Page 200 includes global navigation field 210 and section navigation field 220. Generally, the global navigation and section navigation are the rendered representations of the navigation structure of the site. The remainder of the page is either the content of the page, or content and functionality provided by the browser for interaction with the page (e.g., file pull down menus).

Global navigation field 210 provides links to high level areas or subsites of a site. In another embodiment, global navigation field 210 may also include links to other sites. In one implementation of the present invention, the links included in global navigation field 210 correspond to the immediate children of the root node of the navigation structure. However, other nodes node may operate as effective root nodes by a setting a metadata parameter of the node. Setting the metadata parameter results in the global navigation links of the node being used for the node's children rather than those associated with the top most node.

Section navigation field 220 provides links to specific areas of a site. Including section navigation field 220 on a page renders the lower level links for an area. Including the lower level links allows global navigation field 210 to concentrate on high level links while minimizing the horizontal scrolling that would occur if global navigation field 210 were populated with these links.

It is understood from the description of the invention that the section navigation and global navigation fields provide a framework in which the present invention is practiced. However, the present invention is equally applicable to sites that do not adhere to this model (e.g., no global navigation field or using a separately styled navigation field).

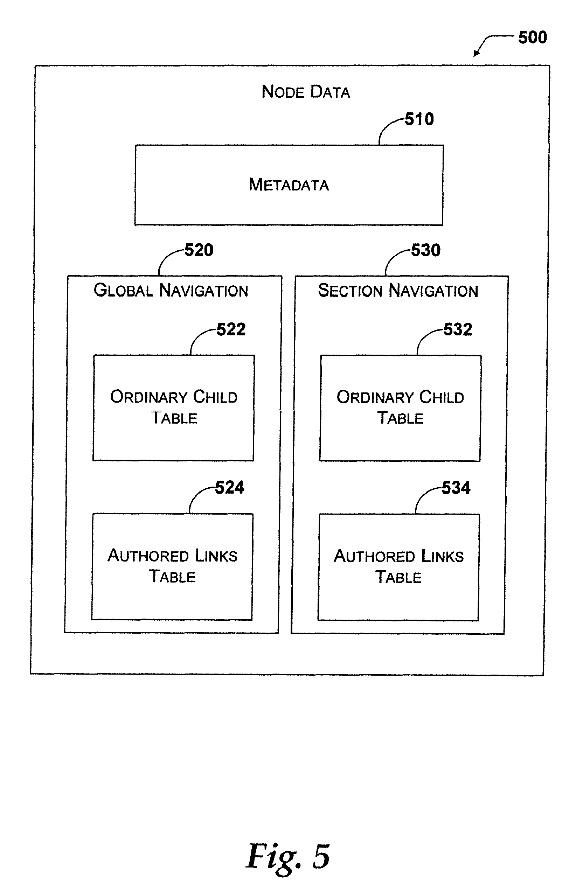

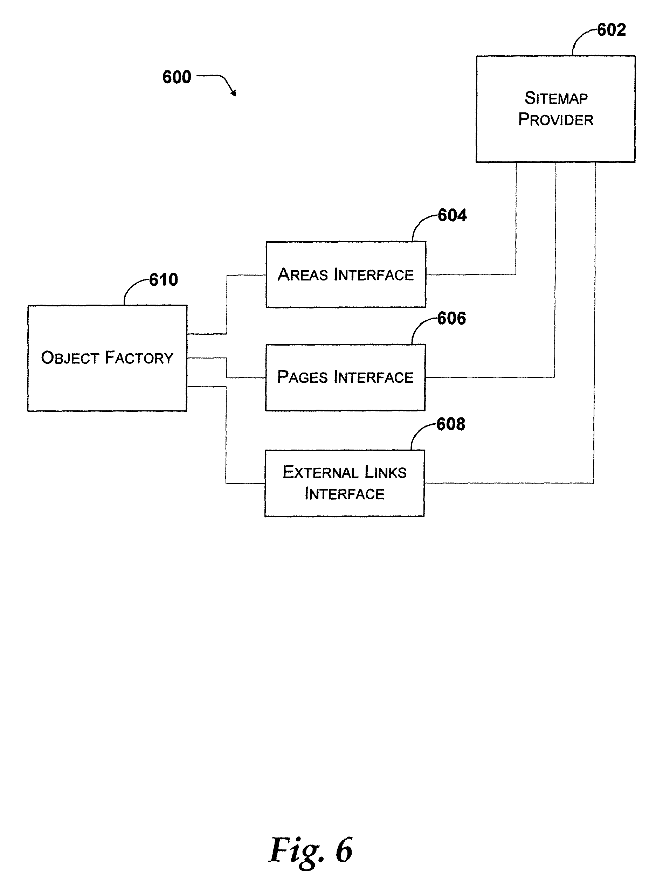

FIGURE 3 illustrates an exemplary tree navigation structure of a page that includes an intra-tree link in accordance with the present invention. The metadata from which tree structure 310 is constructed is stored on server 302 in cache 304. Caching of the metadata is described in greater detail below with relation to FIGURES 5 and 6. Tree structure 310 may be generated at runtime to produce the overall navigation hierarchy of the site.

Tree structure 310 includes nodes (e.g., 312 and 314) and links between the nodes (e.g., 316 and 318). Generally, tree structure 310 is constructed according to the hierarchy of the site, where the site originates at root node 312 and continues down to the lower navigational links (e.g., section links 330). In one embodiment, the nodes immediately lower in the hierarchy from root node 312 correspond to the global links 320 rendered on current page 314.

Tree structure 310 is based on the hierarchy of the site, however the present invention also provides for authored links such as intra-tree link 318. Intra-tree link 318 does not follow the hierarchy of the site but instead provides a sectional link to another node in another section of the site.

The destination node of intra-tree link 318 may be "grafted" into the section of tree structure 310 under current page 314. Grafting provides a different link between two areas than a simple URL (uniform resource locator) reference. In effect, grafting an area roots the grafted area into the target area of the navigation structure as if it were a child of the target area. Accordingly, the grafted area's children may be reached as the navigation structure is traversed through the target area. Display of the children of the target area in a field of a page therefore works similarly to an ordinary child of the target area. Grafting the destination node of intra-tree link 318 creates grafted link that makes the destination node part of the logical hierarchy under current page 314 without being located physically in the hierarchy. An advantage of grafting is that updates to the grafted portion of the navigation structure are reflected throughout the navigation structure.

A number of operations may be initiated in association with the tree structure 310 of the present invention. The operations include getcurrent, getparent, getroot, and getchildren. Each of these operations may be used in generating tree structure 310 at runtime. In other embodiments, these operations may be referred to by other names than those described herein without departing from the spirit or scope of the invention.

A getcurrent operation returns the current node correspond to the page currently navigated to within the site. A getparent operation takes the current node and returns the immediate parent node of the current node.

For a getroot operation, the tree structure is climbed using series of getparent operations until a node is reached with a parameter that states the node is its own parent. This allows for nodes other than the top most node to act as a root node within the navigation structure. When acting as the root node, a node is able to define its own set of global navigation links that are applicable to the pages below the node in the hierarchy.

For a getchildren operation, a node is passed in for which the children information is requested. The children of the node are then discovered. Before the children are returned, the list of children may be trimmed according to the metadata that accompanies each of the nodes. For example, the children designated as not included in navigation, not having permission for access by the current user, or not being currently scheduled for publication are trimmed from the children returned by the getchildren operation. In another embodiment, checking the "included in navigation" parameter is not necessary for an authored link to a site that is managed by the same entity. Since the link was specifically authored, the assumption is that it should be included among the children in a getchildren operation.

FIGURE 4 illustrates an exemplary tree navigation structure that includes a cross-tree link to another site in accordance with the present invention. A first site is represented by a first tree structure 410. Tree structure 410 corresponds to metadata stored in a cache 404 located on server 402. A second site is represented by metadata stored on a second cache, cache 432, on a second server, server 430.

Similar to FIGURE 3, each tree structure (410,440) includes nodes (e.g., 412, 414) connected by links (e.g., 416,418, 420). An additional authored link, cross-tree link 420, is also included. Cross-tree link 420 represents a link from one page of a site located on one server, to a page of another site located on another server. In another embodiment, cross-tree link 420 may be made between two separate sites on the same server rather than the two separate servers shown.

When a cross-tree link, such as cross-tree link 420, is linking to another site that is managed by the same entity as the current site, then items and containers from the other site may be "grafted" into the current site similar to an intra-tree link 418. Grafting refers to establishing a grafted link as described above in the discussion of FIGURE 3.

Another type of cross-tree link is an external link, or link to another site that is managed by a different entity than the current site. External links may not be readily useable as virtual links because information about the hierarchy of the destination is not known. Accordingly, asking for a specific container and children may be ineffective since the destination site may not be structured for such a request. In another embodiment however, information about the structure of the destination site may be requested such that a virtual hierarchical link may be created.

FIGURE 5 illustrates a block diagram of an exemplary set of data corresponding to a node of a navigation structure in accordance with the present invention. Each node has associated node data 500, and node data 500 includes metadata 510, global navigation 520, and section navigation 530. Global navigation 520 includes ordinary child table 522 and authored links table 524. Similarly, section navigation 530 includes ordinary child table 532 and authored links table 534.

Metadata 510 includes parameters of the particular node associated with node data 500. Metadata 510 may include one or more inclusion parameters, scheduling parameters, and security parameters. An inclusion parameter causes the node associated with the parameter to be "included in navigation" when the parameter is set. The scheduling parameters allows for content of the website to publish according to a schedule. A page with a scheduling parameter that is not current, is prevented from publishing. The security parameters may be used to prevent unauthorized users from accessing forbidden pages. Using the metadata allows the site to be "trimmed", or have pages removed, according to the parameter settings included in metadata 510.

Global navigation 520 includes the links included in the global navigation field of the associated page. In the current embodiment, the global links generated according to the hierarchy of the site are included in ordinary child table 522, while authored global links are included in authored links table 524. Authored links include intra-tree links, cross-tree links, and external links that are authored by a site developer in contrast to those generated according to the structure of the site. In another embodiment, the links are not separated according to their field.

Section navigation 530 includes the links included in the section navigation field of the associated page. Similar to global navigation 520, the section links generated according to the hierarchy of the site are included in ordinary child table 532, while authored section links are included in authored links table.

In one embodiment, the security parameters in metadata 510 are used for controlling the ability of a user to navigate to resources that have restricted access. When the navigation structure is generated from the hierarchy of the site, certain pages may be trimmed from the structure or made inaccessible to a user accessing the site based on the user's identity. Certain user's may not have access to selected pages or other resources of the site. For grafted portions of another site, a different set of permissions may apply. A user that has access to the current site may not have access to the grafted portion of the site based on their identity. In one embodiment, the present invention migrates the security settings of the other site when grafted portions of the other site to maintain the security of the resources.

In another embodiment, node data 500 is cached separately from the other data used in rendering the section navigation field and the global navigation field.

FIGURE 6 illustrates an exemplary system for caching and producing a navigation structure in accordance with the present invention. System 600 includes sitemap provider 602, areas interface 604, pages interface 606, external links interface 608, and object factory 610.

Sitemap provider 602 generates the hierarchical navigation structure using the getcurrent, getparent, getroot, and getchildren operations previously described. Instead of accessing the portions of a site hosting service directly for this information, the responses to requests from sitemap provider 602 are returned using interfaces such as areas interface 604, pages interface 606, and external links interfaces 608. These interfaces are objects generated by objects factory 610.

Objects factory 610 provides the actual communication with the site rendering service and gets the data through various operations (e.g., getlink). Object factory then writes the data to one of the interfaces and returns it to sitemap provider 602. The interfaces are cached by object factory 610. The interfaces correspond to the navigation objects that include the metadata and links data for the nodes of the navigation structure. By using the interfaces for communication with the sitemap provider 602, the construction and management of the navigation structure may be separated or remoted on a separate computing device from the rendering of the site. In another embodiment, the interfaces are not used and sitemap provider 602 provides its requests directly to the site rendering service.

In one embodiment, system 600 is also used to cache the security parameters associated with the nodes of the navigation structure. In one example, a parameter indicates whether a node has the same rights, or is similarly accessible by a user, as its parent node. The present invention stores this information for the entire navigation structure and thereby reduces repetitive security checking when the pages corresponding to the nodes are rendered.

In another embodiment, sitemap provider has its own set of parameters for controlling the generation of the navigation structure. For example, an ignore inherit root parameter causes sitemap provider 602 to ignore whether an intermediate node is acting as a root node. With the intermediate root node ignored, the navigation structure is climbed its entire height for operations.

In still another embodiment, the results from a request by sitemap provider 602 (e.g., getchildren) may be sorted. The results may be sorted manually, where the developer chooses the order of the results (e.g., selects the order of the children to be displayed in the section navigation field), or automatically according to metadata associated with each of the results. Additionally, the types of items returned in the results (e.g., pages, authored links, etc.) may be sorted differently, or according to different metadata.

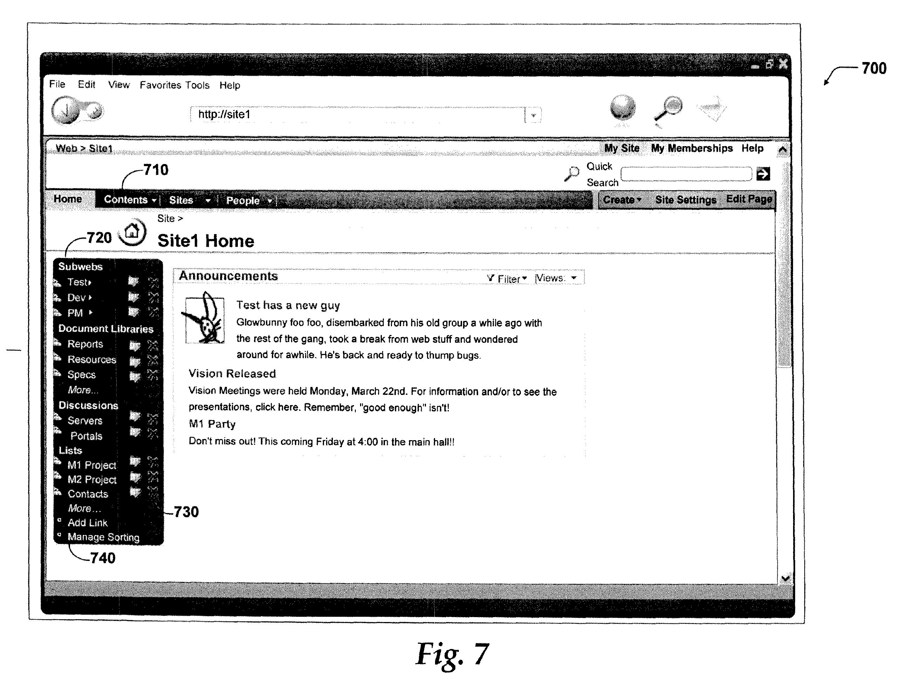

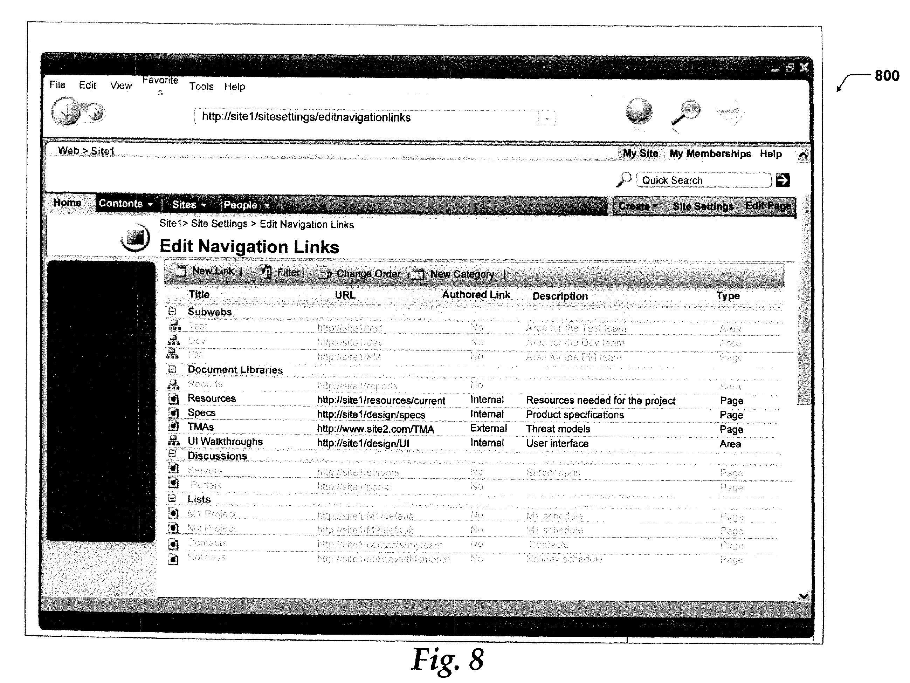

FIGURE 7 illustrates an exemplary screen shot of a page that includes on-page editing for the navigation associated with the page in accordance with the present invention. Page 700 includes global navigation field 710 and section navigation field 720 similar to FIGURE 2. However, page 700 further includes on-page editing elements 730 and 740. The icons and selections of on-page editing elements 730 and 740 allow the user to edit the navigations associated with the page while viewing the page. In another embodiment, on-page editing elements 730 and 740 transfer the user to specific user interfaces for editing the navigation associated with the page (see FIGURES 8-9 below).

FIGURE 8 illustrates an exemplary user interface for editing of navigation links associated with a page of a site in accordance with the present invention. User interface 800 is a web-based UI that allows a developer to edit the navigation links. The navigation links are listed according to their title, URL (Uniform Resource Locator), whether they are an authored link, their description, and their type. Other embodiments may list the navigation links according to different categories. User interface may be used to add new links, new link categories, or change the order of links associated with a page.

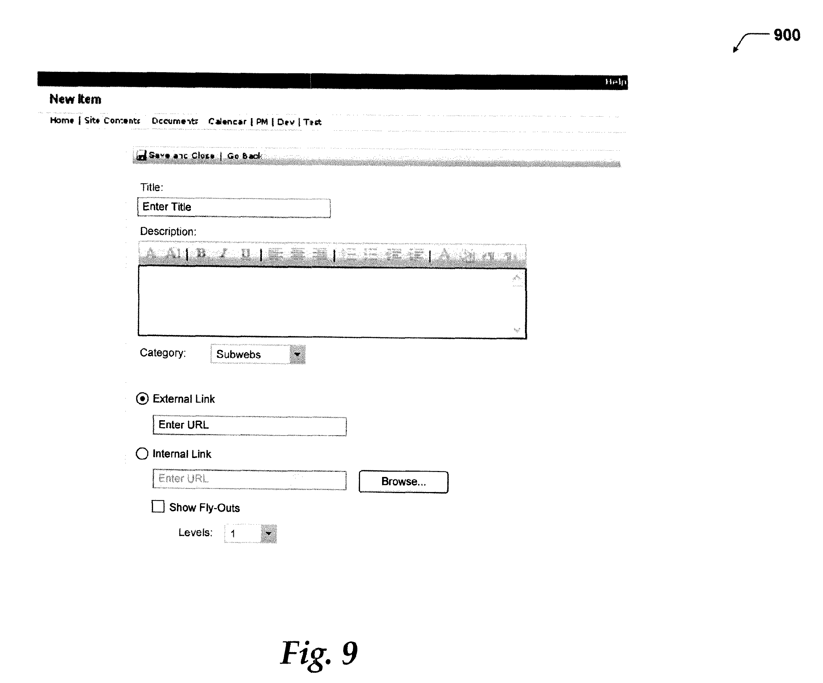

FIGURE 9 illustrates an exemplary user interface for adding new navigation links to a page of a site in accordance with the present invention. User interface 900 provides fields for establishing a new navigation link on a page. The fields include a title field, a description, a category selection field, whether the link is external or internal and an entry field for its URL, and whether fly-out should be shown in association with the navigation link. Different fields may be used for additional embodiments other than the fields shown in user interface 900.

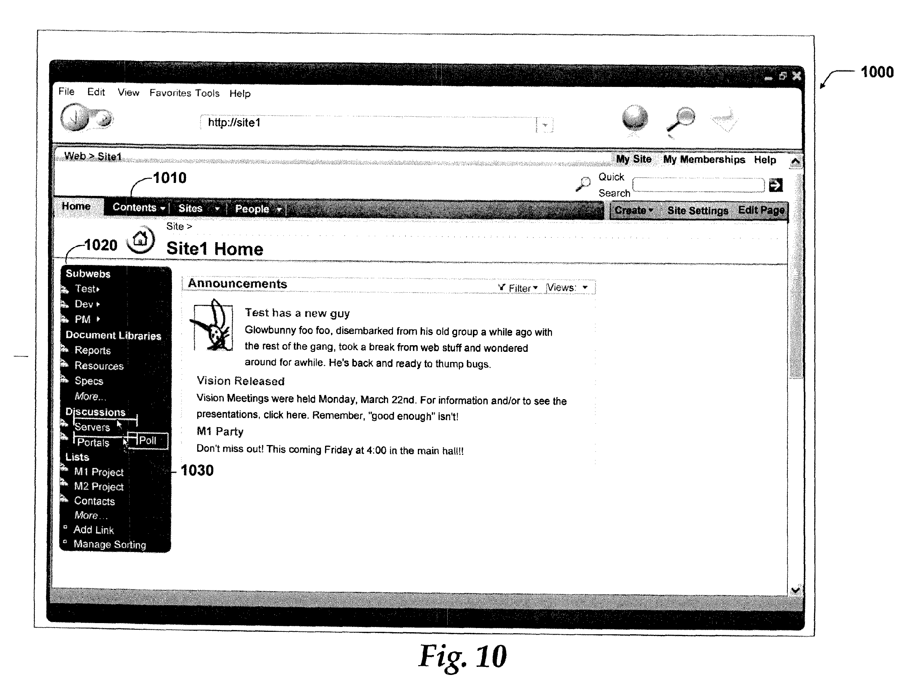

FIGURE 10 illustrates an exemplary screen shot of a page indicating a drag and drop of a new link in accordance with the present invention. Page 1000 includes global navigation field 1010 and section navigation field 1020 similar to FIGURE 2. However, page 1010 further includes a depiction of a drag and drop operation 1030. Drag and drop operation 1030 is illustrative of on-page editing capabilities provided in association with the present invention. Drag and drop operation 1030 corresponds to a dynamic insertion of a link directly onto the page while simultaneously sorting the link among the previously established links of the page. Other embodiments also include the on-page editing capability of deleting links and other operations.

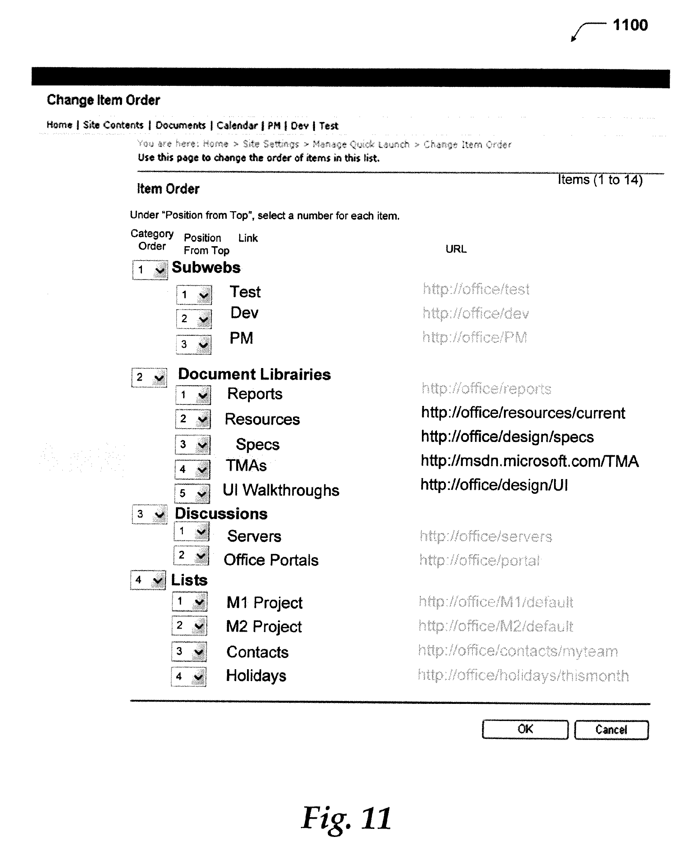

FIGURE 11 illustrates an exemplary user interface for sorting the order of navigation links associated with a page of a site in accordance with the present invention. User interface 1100 provides fields according to a numbering scheme for sorting the navigation links associated with a site. The navigation links are provided in the order indicated. The order of the links is changed by changing the number associated with a particular link and updating the user interface.

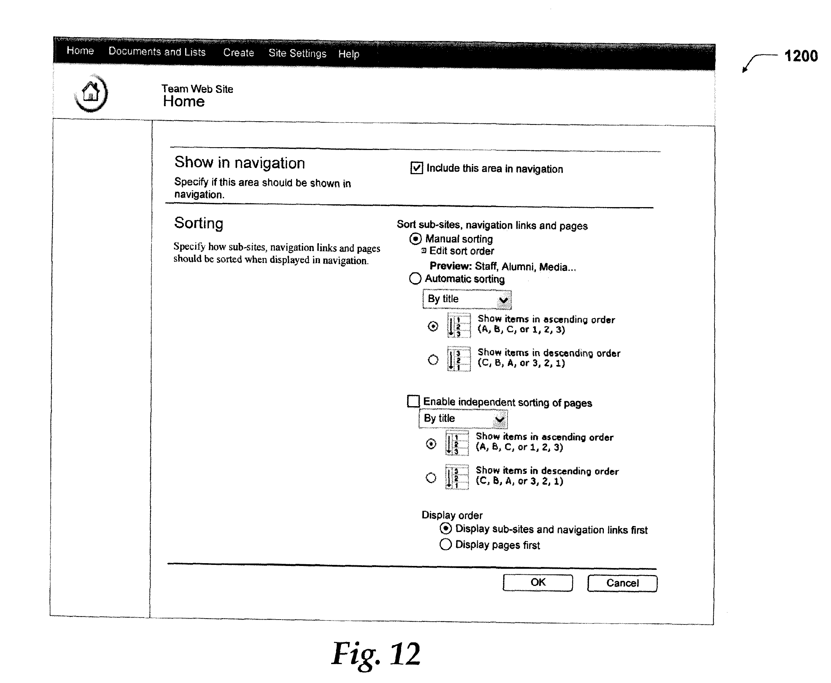

FIGURE 12 illustrates an exemplary user interface for selecting inclusion of a page within the navigation of a site and sorting the pages of the site in accordance with the present invention. User interface 1200 provides a selection to include an area or page within the navigation of a site. Using this selection allows page and other resources to be added or removed from the navigation without actually deleting the resource. User interface 1200 also provides for sorting the resources of a site with both manual and automatic sorting options. The display order of the resources is also selectable. Other embodiments include additional fields for sorting the resources of the site.

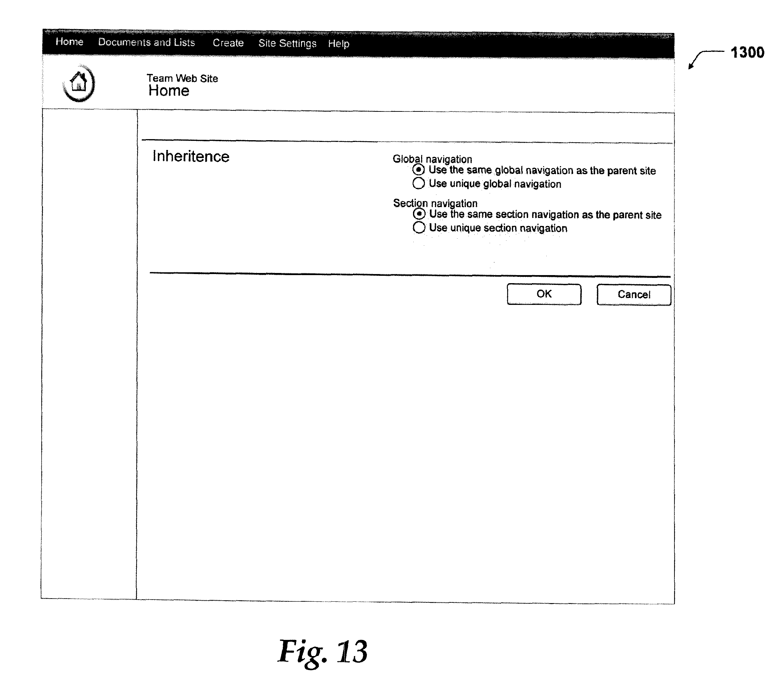

FIGURE 13 illustrates an exemplary user interface for selecting the inheritance property associated with a page of a site in accordance with the present invention. User interface 1300 includes a selection of the inheritance property for the both the global navigation and the section navigation of a site. The inheritance property states that the same navigation links of the parent site to a page should also be used for that page. Without the inheritance property selected, a page may use its own unique set of navigation links apart from its parent.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A computer-implemented method for managing navigation of a network site, comprising:
creating navigation objects that correspond to navigation links associated with the network site;
generating a navigation structure from the navigation objects, wherein the navigation structure is organized according a hierarchy associated with the navigation links;
including an authored navigation object within the navigation structure when the network site includes an authored navigation link; and
rendering a page of the site, wherein the page includes a field that corresponds to the navigation structure.

2. The computer-implemented method of claim 1, wherein the field is a global navigation field that includes child navigation objects of a root page within the navigation structure.

3. The computer-implemented method of claim 2, wherein the root page corresponds to an intermediate node of the navigation structure, the intermediate node having a parameter indicating that the intermediate node is the root node for following child nodes.

4. The computer-implemented method of claim 1, wherein the field is a section navigation field that includes child navigation objects of the page.

5. The computer-implemented method of claim 1, further comprising examining a set of a metadata associated with the page to determine which of the navigation objects to include within the field.

6. The computer-implemented method of claim 5, wherein a navigation object is removed from inclusion in the field when the metadata includes a parameter that is set to indicate that the navigation object should not be included in the navigation.

7. The computer-implemented method of claim 5, wherein a navigation object is removed from inclusion in the field when an identity associated with a user for whom the page is rendering indicates that the navigation object is forbidden to the user.

8. The computer-implemented method of claim 5, wherein a navigation object is removed from inclusion in the field when the metadata includes a parameter that is set to indicate that a scheduled time corresponding for publishing content corresponding to the navigation object has not been reached.

9. The computer-implemented method of claim 1, wherein including the authored navigation object in the structure further comprises grafting the authored navigation object into a target area of the navigation structure such that the authored navigation object is treated as a child of the area.

10. The computer-implemented method of claim 9, wherein the authored navigation object corresponds to a intra-tree link that links two separate portions of the navigation structure.

11. The computer-implemented method of claim 9, wherein the authored navigation object corresponds to a cross-tree link that links a portion of another network site with the navigation structure.

12. A system for managing navigation of a network site, comprising:
a cache;
an object factory that is configured to create and store navigation objects in the cache, wherein the navigation objects correspond to navigation links of the network site; and
a sitemap provider, wherein the sitemap provider is configured to:
request the navigation objects from the object factory;
generate a navigation structure from the navigation objects,
wherein the navigation structure is organized according a hierarchy associated with the navigation links;
support authored navigation objects within the navigation structure when the network site includes authored navigation links; and
forward the navigation structure for use in rendering a page of the site.

13. The system of claim 12, wherein the page includes at least one of a global navigation field that includes child navigation objects of a root page within the navigation structure, and a section navigation field that includes child navigation objects of the page.

14. The system of claim 13, wherein the root page corresponds to an intermediate node of the navigation structure, the intermediate node having a parameter indicating that the intermediate node is the root node for following child nodes.

15. The system of claim 12, further comprising examining a set of a metadata associated with the page to determine which of the navigation objects to include within the field.

16. The system of claim 15, wherein a navigation object is removed from inclusion in the field when the metadata includes a parameter that is set to indicate that the navigation object should not be included in the navigation.

17. The system of claim 12, wherein including the authored navigation object in the structure further comprises grafting the authored navigation object into a target area of the navigation structure such that the authored navigation object is treated as a child of the area.

18. The system of claim 17, wherein the authored navigation object corresponds to at least one of an intra-tree link that links two separate portions of the navigation structure and a cross-tree link that links a portion of another network site with the navigation structure.

19. A computer-readable medium that includes computer-executable instructions for managing navigation of a network site, the instructions comprising:
creating navigation objects that correspond to navigation links associated with the network site;
generating a navigation structure from the navigation objects, wherein the navigation structure is organized according a hierarchy associated with the navigation links;
including an authored navigation object within the navigation structure when the network site includes an authored navigation link;
trimming selected navigation objects from the navigation structure, wherein the selected navigation objects are selected according to metadata that corresponds to each navigation object; and
rendering a page of the site, wherein the page includes a field that corresponds to the navigation structure after the selected navigation objects are trimmed.

20. The computer-readable medium of claim 19, wherein a navigation object is trimmed when the metadata includes a parameter that is set to indicate that the navigation object should not be included in the navigation.

21. The computer-readable medium of claim 19, wherein a navigation object is trimmed when an identity associated with a user for whom the page is rendering indicates that the navigation object is forbidden to the user.

22. The computer-readable medium of claim 19, wherein a navigation object is trimmed when the metadata includes a parameter that is set to indicate that a scheduled time corresponding for publishing content corresponding to the navigation object has not been reached.

23. The computer-readable medium of claim 19, wherein including the authored navigation object in the structure further comprises grafting the authored navigation object into a target area of the navigation structure such that the authored navigation object is treated as a child of the area.
